# EUROPEAN PATENT APPLICATION

(11) **EP 1 239 624 A2**
(43) Date of publication of application: **11.09.2002**
(21) Application number: 02290321.5
(22) Date of filing: 08.02.2002
(51) Int. Cl.: H04L 1/00

(54) **Method and system for frame synchronous forward error correction**

(30) Priority: 23.02.2001 US 271149 P; 02.07.2001 US 895414
(71) Applicant: ALCATEL, 75008 Paris (FR)
(72) Inventor: Brown, Carlton D., Plano, Texas 75075-5813 (US)
(74) Representative: Cabinet Hirsch

(57) **Abstract**

A method and system are disclosed for applying frame synchronous forward error correction codes to SONET format optical data using an error correction circuit. One embodiment of the method of the present invention comprises the steps of adjusting the length of an error correction method codeword containing an error correction portion, such that a whole number of codewords fit between the A1-A2 framing bytes, and synchronizing the error correction circuit to an A1-A2 transition in the SONET frame. The step of synchronizing the error correction circuit can further comprise generating a framing pulse at a framer, and sending the framing pulse to a state machine to initialize the registers in an encoder to a start state for the encoding process, wherein the start state corresponds to an initial loaded value defined by the A1-A2 transition. The framing pulse is also sent to a decoder to locate the error correction portion of the codeword.

## Description

This application claims the benefit of U.S. provisional application No. 60/271149, filed February 23, 2001.

### TECHNICAL FIELD OF THE INVENTION

This invention relates generally to methods and systems for error correction, and, in particular, to methods and systems for error correction in optical transmission systems. Even more particularly, the present invention relates to a method and system for frame synchronous forward error correction of data in a SONET transmission system.

### BACKGROUND OF THE INVENTION

One of the characteristics of a light wave transmission system is how large of a distance can be spanned between a receiver and a transmitter. This distance can be limited by the output power of the transmitter or by the receiver performance characteristics, specifically receiver sensitivity. The quality of the fiber connecting the transmitter and the receiver can also greatly influence the distance separating the transmitter from the receiver. From an economic point of view, the distance that can be spanned between a transmitter and a receiver determines the expenditures that must be made to physically lay fiber in the ground or to install repeaters and other supporting equipment.

As the distance between transmitter and receiver increases, the likelihood of data loss or degradation also increases. One way of compensating for this decrease in performance is to use an error correction scheme. Error correction schemes can be used to identify corrupted data bits as they arrive at the receiver and to then correct them before they leave the receiver.

Forward error correction consists of sending the data transmission along with additional error correction bits called checksum bits. A checksum is essentially a code that in some measure represents the internal data characteristics of the transmitted data. The data and checksum bits can be manipulated at the receiver to identify and correct errors that might have occurred during transmission from the transmitter to the receiver. The method and circuit used to create and insert the checksum at the transmitter is commonly called the encoder. The related method and circuit used to interpret the checksum and correct errors at the receiver is commonly called the decoder.

A forward error correction encoder can take data that is to be transmitted and use it to build a codeword. The codeword consists of the data field (the original data to be transmitted) and, appended onto the data field, a checksum. In SONET systems in the prior art, the checksum can be located in unused bytes in the SONET frame. Careful selection of the codeword makes it possible, by examination of the codeword at the receiver, to determine if any data transmission errors occurred (i.e., if any data was inverted). Because digitally transmitted data comprises a binary system of ones and zeros (a digital system), an error is the same as an inversion. Such an inversion can be corrected by a simple reinversion.

In SONET light wave transmission systems, two types of forward error correction schemes are commonly used. These two methods of forward error correction are, respectively, in-band forward error correction and out-of-band forward error correction. In an in-band forward error correction scheme, unused SONET overhead bytes are loaded with forward error correction checksums that are computed over a previous data set (over previous frames or parts of previous frames). The signal, including checksums, is transmitted in a typical manner over an optical fiber to a receiving unit that demultiplexes the signal, locates the checksums in the unused overhead locations, and uses the checksums to correct errors occurring in the transmission channel.

This is a fairly straightforward method for implementing forward error correction. Because the checksums are loaded into unused SONET overhead bytes, the circuits responsible for locating the SONET frame and the used SONET overhead bytes can also be used to locate the checksums at the receive end. No specialized framing symbols or framing circuits are needed at the decoder to find the checksums.

While this is a simple method of implementing forward error correction, it has some severe limitations. These limitations are mainly due to the limited amount of available overhead bandwidth in a SONET frame. The limited number of available overhead bits limits the number of checksum bits that can be applied to error correction. This, in turn, limits the number of errors that can be corrected within any give SONET frame with currently available methods.

There are prior art methods capable of correcting many more bits per frame than those employed by typical in band error correction schemes. However, these require many more checksum bits than can be accomodated by the unused SONET overhead. In these examples the data rate must be increased above the standard SONET rate to accomodate the checksum bits.

Prior art forward error correction schemes like these often use the Reed-Solomon ("RS") method. This method requires many more bits than can be accomodated by the SONET format, even if all of the SONET overhead were used exclusively for error correction checksums. To solve this problem, prior art schemes increase the data rate above the standard SONET rate and use the additional bandwidth to insert totally new overhead time slots that can accept the checksums for the Reed-Solomon method.

In all prior art examples, the relationship between the location of the SONET frame (defined by the A1-A2 transition) and the new overhead timeslots containing the checksum data, is not controlled. Therefore, the SONET frame cannot be used to locate the checksum data needed by a Reed-Solomon method. Because of this, all prior art examples must not only insert new time slots containing the checksum data, they must also insert time slots containing new framing bits needed to locate the "RS" checksum data at the receive-end. This requires that the receive end employ two layers of framing with associated support circuitry. One dedicated to locating the checksum data and demultiplexing the SONET data. The second dedicated to locating the SONET frame so that the rest of the standard SONET overhead can be processed.

Thus, a traditional out of band method can not use the A1-A2 transition with existing FEC chips. However, if the RS encoder were to synchronize its encoding function to the A1-A2 transition, and if the encoding method were modified so that there was a fixed relationship between the checksum data and the SONET frame in the data stream, then the A1-A2 transition could be preserved and still be useful for locating all of the bits in a frame, including the FEC checksum. A Reed-Solomon method can be modified to obtain a fixed relationship with the SONET frame by shortening the code word. Shortening of an FEC code word is fairly well known in the art, in particular, in the case of the Reed-Solomon method.

A prior art in-band forward error correction scheme uses an interleaved set of shortened Hamming codes to effectively transmit data in a SONET light wave system. Hamming codes are very efficient codes that can encode a large amount of data to produce a relatively small set of checksum data. This is a useful characteristic in a SONET system, because the percentage ratio of available unused SONET overhead to actual customer traffic (or payload) is very small in a SONET system. However, Hamming codes are not able to correct multiple errors. In fact, a single Hamming code can only correct a single error, and, at best, a Hamming code may be able to detect only two errors. Hamming codes are thus double-error-detect and single-error-correct types of methods. The interleaving of Hamming codes can be used to achieve a limited amount of burst error correction, but the improvements in error correction performance by interleaving are fairly limited. Another prior art in band method uses a BCH method capable of correcting 3 errors per SONET frame. While this is better than an interleaved Hamming code, it still falls far short of the capabilities offered by out of band methods such as Reed-Solomon.

Despite the problems associated with in band forward error correction, the loading of checksum data into the unused SONET overhead permits the use of existing high speed multiplexing and demultiplexing circuits. This is a valuable advantage because there is a considerable amount of multiplex functionality that must be built into a SONET system. For example, SONET transmission systems typically handle the difficult task of getting a digital signal up to a switching frequency, such as a serial data rate of ten gigabits per second. SONET transmission equipment typically take input signals at relatively low serial data rates (e.g., 622 megabits per second, 155 megabits per second, etc.) and examine, process, and switch the signals to output them at a much higher rate (e.g., ten gigabits per second in newer such systems). This output rate could even be much greater in future implementations.

Much of what determines the state of the art in SONET systems of this type are the high-speed multiplex circuits. Prior art in-band forward error correction schemes are compatible with these circuits, with the result that the last multiplex stages performing the parallel-to-serial conversion of the data from some lower frequency to a higher frequency, for example, 10 gigabits per second, need not be redesigned. Further, even though in-band forward error correction schemes have limited performance, for the most part, the same performance monitoring features of existing SONET systems can continue to be used with in-band forward error correction.

However, the limited performance of in-band forward error correction, despite its advantages, has led to the emergence of out-of-band forward error correction schemes. Out-of-band forward error correction allows for the use of much more powerful correction methods. In particular, because of the increased data traffic over fiber optic networks due to, for example, the increase in IP traffic associated with the Internet, out-of-band FEC schemes are preferable because they can provide significantly better performance than in-band schemes using the existing SONET overhead.

Further, because of the same growth in Internet traffic, installed fiber optic cables that were designed for lower bandwidth, such as OC48 (2.5 gigabit) systems, are now being looked at for upgrading to fiber optic links that can carry 10 gigabits per second. These older fiber optic systems may not be as viable for 10-gigabit per second speeds as they are for 2.5-gigabit per second speeds. Furthermore, just installing more repeaters between the terminals is not a cost-effective solution, as these are very expensive. A more cost-effective alternative would be to implement an effective error correction scheme to allow communications across a useful distance at 10-gigabits per second over fiber that may have been originally designed for much lower transmission speeds.

As discussed above, one powerful encoding method that has been used with forward error correction schemes is a Reed-Solomon forward error correction method. This type of method is well known in the art and has been used in such things as CD players and space flight communications. However, in currently existing transmission systems, there is a tremendous amount of checksum data associated with the RS method. Even if all of the SONET overhead were used, it could not come close to accommodating the checksum data associated with the RS method.

Therefore, the data rate of a signal is increased by some percentage, about on the order of 7% to 11%, depending on the dimensions of the RS method selected, to accommodate the checksums. As previously discussed, however, the location of the checksum data in the serial streams of current systems using an RS method basically has no relationship to the location of the SONET frame itself. Because of this, even more overhead bits are added to a data channel, in addition to the checksum, whose only purpose is to locate the checksums. This further increases the bandwidth.

Further still, not only is the bandwidth requirement increased in these existing RS FEC schemes, but the additional set of framing bits for locating the checksum also increases the complexity of the multiplex and demultiplex circuits. In fact, currently existing demultiplex circuits are unusable with this scheme because they were not designed to locate the dedicated framing bits needed to find the checksum data. Instead, existing circuits designed for SONET were only designed to recognize the A1-A2 framing patterns of the SONET frame, as known to those in the art. In order to use these prior art RS FEC schemes, a new high-speed demultiplexer design, and framing circuit design , in addition to a new design for the encoder and decoder, is required. The high-speed multiplex and high-speed demultiplex circuits are typically implemented using gallium arsinide, or some other relatively exotic and very expensive technology. Both the design time and materials needed to create custom circuits specifically for a particular method can thus be very expensive to implement.

### SUMMARY OF THE INVENTION

Therefore, a need exists for a method and system for frame synchronous forward error correction having a forward error correction code that fits evenly between the A1-A2 framing bytes of a SONET frame. Such a forward error correction scheme could use, for example, a Reed-Solomon code whose repetition rate matches the repetition rate of the SONET framing bits.

A further need exists for a frame synchronous forward error correction method and system having an output format with a fixed relationship between the A1-A2 framing pattern and the checksum. Such a forward error correction scheme would not need additional framing bits but could utilize the SONET framing bytes already present in the data stream.

Still further, a need exists for a method and system for frame synchronous forward error correction that can be implemented using currently existing high-speed multiplexing and demultiplexing circuits.

An even further need exists for a frame synchronous forward error correction method and system with the ability for burst error correction that is able to correct at least eight-bit errors occurring in the data field.

Yet another need exists for a frame synchronous forward error correction method and system that is scalable and can be implemented in various speed transmission systems, such as 2.5-gigabit/second or 10-gigabit per second transmission systems.

Even further, a need exists for a method and system for frame synchronous forward error correction that can be implemented over existing fiber optic lines. A high data rate signal travelling over a lower-rated fiber optic line typically generates more errors than a low data rate signal over the same line. The forward error correction scheme of this invention can reduce the level of errors back to an acceptable level, allowing for higher rate equipment to be installed on existing lines.

The present invention provides a method and system for frame synchronous forward error correction that substantially eliminates or reduces disadvantages and problems associated with previously developed methods and systems for forward error correction.

In particular, the present invention provides a method and system for applying frame synchronous forward error correction codes to SONET format optical data using an error correction circuit. One embodiment of the method of the present invention comprises the steps of adjusting the length of an error correction codeword containing an error correction portion, such that a whole number of codewords fit between the A1-A2 framing bytes of a SONET frame, and synchronizing the error correction circuit to an A1-A2 transition in the SONET frame. The step of synchronizing the error correction circuit can further comprise generating a framing pulse at a framer, and sending the framing pulse to a state machine to initialize the registers in an encoder to a start state for the encoding process, wherein the start state corresponds to an initial loaded value defined by the A1-A2 transition. With this method, the receiver only has to locate the A1-A2 transition to find not only the checksum data but the SONET overhead data as well.

The method and system for frame synchronous forward error correction of the present invention provides an improvement or technical advantage by using a forward error correction code whose checksum locations maintain a fixed relationship with the A1-A2 locations of a SONET frame.

A still further technical advantage of the present invention is that it provides an error correction code having an output format with a fixed relationship between the A1-A2 SONET framing pattern and the checksum.

An even further technical advantage that the method and system for frame synchronous forward error correction of the present invention provides is that it can be implemented using currently existing high-speed multiplexing and demultiplexing circuits.

Further still, the present invention provides a technical advantage of a frame synchronous forward error correction method and system having burst error correction capability for up to eight-bit errors occurring in the data field.

The present invention provides a still further technical advantage in that it is scalable and can be implemented in various speed transmission systems.

Yet another technical advantage of the present invention is that it can incorporate a shortened RS code, such that there is a fixed relationship between the A1-A2 SONET framing pattern and the checksum data.

The present invention provides still another technical advantage of a frame synchronous forward error correction method and system that can be implemented on existing fiber optic lines designed for lower-speed transmission to transfer data at a much higher data rate, while maintaining the integrity of the transmitted data.

### BRIEF DESCRIPTION OF THE DRAWINGS

A more complete understanding of the present invention and the advantages thereof may be acquired by referring to the following description, taken in conjunction with the accompanying drawings, in which like reference numbers indicate like features and wherein:

FIGURE 1 is a simplified block diagram of a typical SONET transmission system in which the method and system of the present invention can be implemented;

FIGURE 2 is a more detailed block diagram of an exemplary receiver used in the SONET transmission system of FIGURE 1;

FIGURE 3 is an example of a Reed-Solomon 232/216 code that has been frame synchronized to an OC-12 SONET frame;

FIGURE 4 is an example of an implementation of the present invention in which a standard Reed-Solomon code is extended from a 255/239 codeword size to a 256/240 codeword size;

FIGURE 5 is a block diagram representation of the transmission side of an STM64 (OC-192) SONET transmission system implementing the frame synchronous forward error correction method and system of the present invention;

FIGURE 6 is a more detailed block diagram of STM16 encoder 510 of FIGURE 5;

FIGURE 7 is a block diagram representation of the reception side of SONET transmission system 500 of FIGURE 5; and

FIGURE 8 is a more detailed block diagram of OC-48 decoder 770 of FIGURE 7.

FIGURE 9 is a more detailed block diagram of the FEC decoder 630 of FIGURE 6.

### DETAILED DESCRIPTION OF THE INVENTION

Preferred embodiments of the present invention are illustrated in the FIGUREs, like numerals being used to refer to like and corresponding parts of various drawings.

The present invention provides the capability for applying out-of-band forward error correcting codes to the SONET hierarchy without changing the contents of the SONET frames. The present invention can perform this function by 1) using a code message length which divides evenly into one or more SONET frames, and 2) by frame-synchronizing the FEC encoders and decoders to the A1-A2 transition. The method and system of the present invention can be implemented using existing high-speed demultiplexing and framing chips, thus eliminating the need to redesign costly circuit components. The framing function of a system implementing the frame synchronous forward error correction method and system of the present invention is about 50% simpler than previous FEC designs and allows for the use of existing standard parts.

The frame synchronous forward error correction scheme of this invention uses some principles of out-of-band forward error correction, as known to those skilled in the art. One embodiment of the present invention implements a code whose message length divides evenly into a SONET frame. For example, a typical Reed-Solomon [255,239] code can be shortened to a Reed-Solomon [232,216] code or extended to a Reed-Solomon [256,240] code so as to evenly divide into a typical size SONET frame. The error correction encoders can then be synchronized so that checksums appear periodically after every A1-A2 transition in a multiplexed data stream.

The present invention applies FEC techniques to SONET telecommunications. "Frame synchronous FEC" is a special type of out of band FEC. Like other out of band schemes, this invention does not insert the "RS" checksums into unused SONET overhead bytes because there are simply too many checksum bits to fit in the available SONET overhead. Instead the data rate has to be increased slightly to provide additional time slots needed to contain the checksum data. These are not SONET overhead bytes, but additional bytes added to the stream by increasing the data rate.

This invention shares one similarity with in band FEC schemes. In band FEC schemes that employ Hamming or other BCH codes, shorten those codes (using well-known techniques) so that they fit evenly within a SONET frame. In the present invention, a shortened Reed-Solomon code is selected such that the number of bits separating the checksums has an integer relationship with the number of bits separating the A1-A2 transition. By maintaining an integer relationship, and by synchronizing each encoding cycle to an A1-A2 transition the invention makes it possible for a decoder to use pre-existing framing circuits that search for the A1-A2 transition to find this same transition in the encoded data stream and use the transition to locate the checksums needed for error correction.

Prior art out of band schemes don't maintain an integer relationship, and consequently the A1-A2 data transition is not intact because periodically a checksum will fall within the A1-A2 pattern. When this occurs, a circuit designed to locate the A1-A2 transition will declare an error because of the presence of the checksum within the pattern. Because of this, prior art schemes have to insert not only the checksum data, but also a second layer of framing bits, which do maintain an integer relationship with the checksum bits. Furthermore, the prior art schemes require a new framing circuit design to recognize this second layer of framing, whereas the present invention uses only one layer of framing.

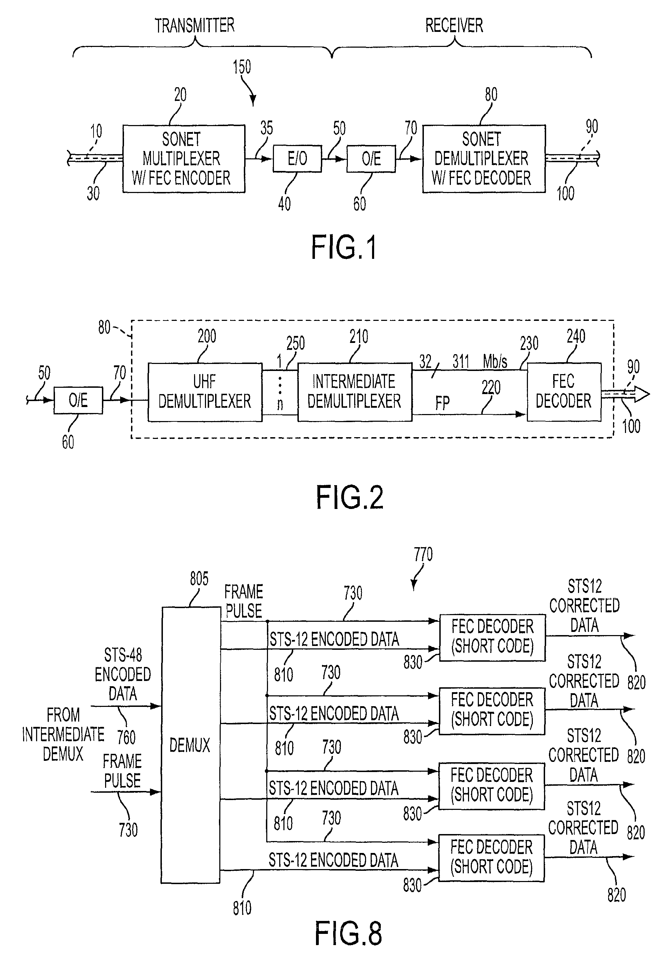

FIGURE 1 is a simplified block diagram of a typical SONET transmission system 150 in which the method and system of the present invention can be implemented. Uncorrected data 10 is delivered to SONET multiplexer with FEC encoder 20 over connection 30. The output from SONET multiplexer with FEC encoder 20 is forwarded, on connection 35, to electrical-to-optical ("E/O") converter 40 which converts the electrical signal from SONET multiplexer with FEC encoder 20 into an optical format for transmission over optical connection fiber 50. SONET multiplexer with FEC encoder 20, together with electrical-to-optical converter 40 and connecting fibers, are the transmitter side of transmission system 150.

The optical signal transmitted over optical fiber 50 arrives at optical-to-electrical ("O/E") converter 60, which converts the optical signal to electrical format and forwards it over corresponding electrical connection 70 to a SONET demultiplexer with FEC decoder 80. SONET demultiplexer with FEC decoder 80 performs the error correction at the receiving end and outputs corrected data 90 over output connection 100. SONET demultiplexer with FEC decoder 80 and optical-to-electrical converter 60, together with connecting paths, form the receiver side of transmission system 150. Transmission system 150 of FIGURE 1 can be any bandwidth transmission system, such as a 10-gigabit OC-192 system (STM64 system in European standards). Connections 30, 35, 70 and 100 can be comprised of any electrically conductive material, such as copper. Optical fiber 50 can be any optical fiber of sufficient capacity.

FIGURE 2 is a more detailed block diagram of the receiver end of transmission system 150 of FIGURE 1, and in particular of SONET demultiplexer with FEC decoder 80. O/E converter 60 provides an electrical signal over connection 70 to UHF demultiplexer 200 of SONET demultiplexer with FEC decoder 80. UHF demultiplexer 200 receives the electrical signal from O/E converter 60 and converts the received serial data stream into a relatively lower frequency set of n parallel data streams 250. In some implementations, n can be equal to 16, resulting in the one serial signal into UHF demultiplexer 200 being converted into 16 parallel signals output at 1/16^{th} of the input data rate. Some of the parallel data streams 250 are indicated by dashes in FIGURE 2.

Each of the parallel data streams 250 output from UHF demultiplexer 200 are fed to an intermediate demultiplexer 210 that performs, in particular, the framing function. In a typical SONET receiver, intermediate demultiplexer 210 locates the A1-A2 framing bytes and produces perhaps a slightly larger number of intermediate output signals 230 (e.g., 32 signals at 311 megabits per second) along with a framing pulse 220. The framing pulse 220 defines the location of the A1-A2 framing pattern and is fed, along with intermediate output signals 230, to FEC decoder circuit 240, which demultiplexes (locates the checksums) and performs error correction on the received signals 230. Once the checksums are located and processed by FEC decoder 240, any errors can be located and corrected.

In particular, when using a Reed-Solomon code with the method of this invention, any error occurring in the data field of up to eight bits can be corrected. The forward error correction method can be any forward error correction method such that the length of the SONET frame is an integer multiple of the length of the message field in each code word. Thus, any method whose message length divides evenly into the length of a SONET frame, can be used with the method and system of this invention. The relationship between the SONET frame and the checksum data must remain fixed.

The system of the present invention includes a multiplexer that can process the SONET frame, compute the checksum over a portion of the SONET frame, and combine the checksum with the SONET frame in such a way that the combined bit length of the SONET frame plus the checksum is one in which the position of the SONET frame can be fixed with respect to the checksum. For example, an OC-12 (in European terms, an STM4) signal consists of twelve A1's, followed by twelve A2's, followed by C1 overhead bytes, and then the payload information. A SONET frame is essentially organized into nine rows, where the first bytes of each row consist of overhead (transport overhead) and the remainder consist of payload envelope information. Each SONET frame is always 125 microseconds long and, for example, on a SONET basic rate STS1 frame, contains exactly 6,480 bits in the frame. The number of bits in the frame can differ based on the bandwidth of the system being used. For example, an STS12 signal would have twelve times 6,480 bits in the frame. However, even in an STS 12 or greater bandwidth SONET signal, the A1-A2 framing data still occurs once every 125 microseconds.

Thus, to feed, for example, an STS 12 signal into a forward error correction encoder, the encoder might use, for example, a Reed-Solomon method. The RS method produces checksums that have to be appended onto portions of the SONET frame, resulting in the total number of bits (checksum plus SONET frame) being larger than the original SONET frame. It is useful to have a multiplexer that creates gaps in the outgoing data stream that can accept the checksum so that the SONET data is not overwritten or destroyed. This procedure is well known in the art. The multiplexer will not only place open the gaps, but will place the gaps at an interval such that the position of the A1-A2 data relative to the checksum does not change from frame to frame.

The size of the gaps created by a multiplexer (the width of the gaps) is determined by the number of checksums that must be loaded into a gap. The number of checksums that must be loaded into a gap is determined by the method used for the forward error correction scheme. A standard RS method uses a codeword that is 255 symbols long, where each symbol is a byte of eight bits, and that contains a message that is 239 symbols long. The Reed-Solomon method works well within a SONET system because the SONET frame is fundamentally a byte-oriented format.

A 255/239 Reed-Solomon code, when applied to a SONET frame, will result in the A1-A2 bytes occurring once every 255 symbols (bytes). In the data stream output from a transmission system employing a standard Reed-Solomon code, the A1-A2 bits need not always be consecutive, because for most frames the A1-A2 data is readily observable in the serial data stream and thus easily detectable. What will happen, however, is that as the data stream is examined, there will be periods where the checksum will appear in the midst of the A1-A2 data. This occurs because, unfortunately, 239 bytes does not divide evenly into any standard SONET frame.

Checksum data in a standard Reed-Solomon code will therefore "walk" relative to the A1-A2 data (or A1/A2 data) from frame to frame. The frame synchronous forward error correction method and system of this invention avoids this problem by taking a standard 255/239 Reed-Solomon code and either shortening it to a 232/216 code or lengthening it to a 256/240 code. The preferred method is to shorten a standard Reed-Solomon code to a 232/216 code. The shortening process is well known in the art.

By shortening the standard RS code, there is some marginal cost in efficiency. The resulting code is itself not as efficient because the same number of checksums are being used to encode a smaller amount of data. However, the advantages outweigh the disadvantages in that the loss of performance is almost nonexistent (and certainly negligible), but the advantages are quite significant in that high-speed demultiplexing and multiplexing circuits do not need to be redesigned to implement the code. In fact, the resulting circuit is itself simpler because there are no longer two separate frame search functions as in the prior art. The circuit does not have to locate the framing bits that were placed simply for locating the checksums. Instead, the method and system of this invention can simply perform a frame search for the SONET frame, which must be done in any event, and once this is performed the location of the SONET overhead is known, as is the location of the checksum data. The result is that circuits with fewer gates can be built at a lesser cost than previous such circuits.

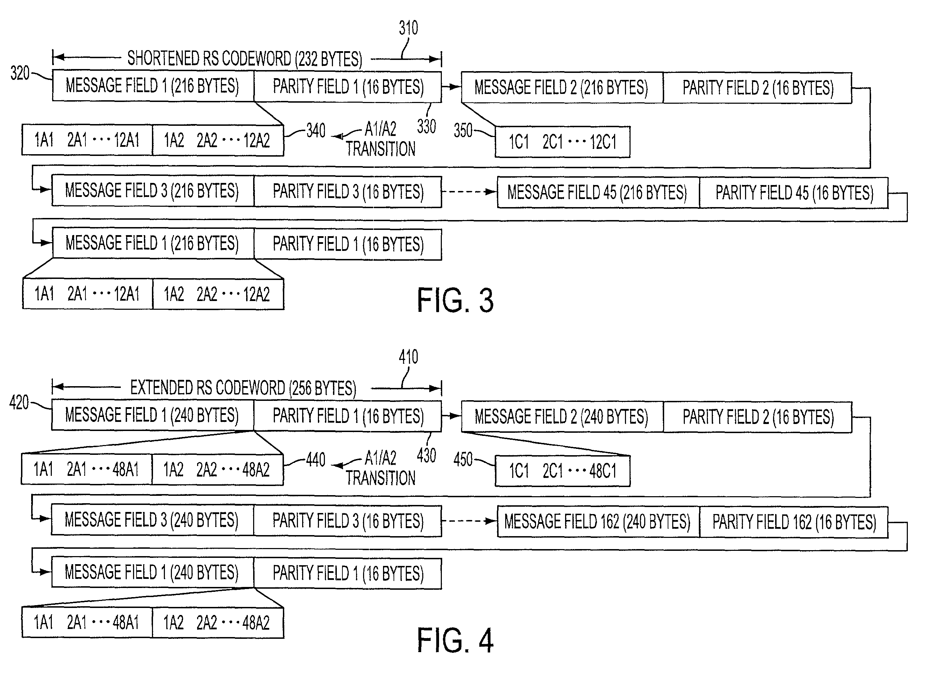

Turning now to FIGURE 3, an example of an RS 232/216 code that has been frame synchronized to an OC-12 frame is shown. Shortened RS codeword 310 includes message field 320 and parity field 330. Message field 320 comprises a shortened message field of 216 bytes, instead of the 240 message bytes of the standard RS codeword. A standard 16 bytes of checksum are added to message field 320 as parity field 330 so that the resulting shortened RS codeword is only 232 bytes in length, as opposed to the 255-byte standard length. Having a total of 216 message bytes will always result, when repeated, in an A1-A2 transition that appears in the same location relative to the parity field. This is because the overall SONET frame size is a multiple of 216 bytes for whatever bandwidth system is used (e.g., OC-12, OC-192, etc.). In this example, exactly 45 code words will fit between each A1-A2 transition in any OC12 signal. Similarly, 180 code words will fit between each A1-A2 transition in any OC48 signal. FIGURE 3 also includes A1-A2 transition 340 and twelve C1 overhead bytes 350. An OC-12 frame can hold 45 232-byte shortened RS codewords, for a total of 10,440 bytes/frame.

In the example of FIGURE 3, parity field 330 is located immediately following A1-A2 transition field 340. This location, however, is arbitrary and the first parity field could instead, for example, be located immediately after the last C1 byte. The first checksums can also be located among the sequence payload envelope (i.e., message field 320) to minimize the amount of jitter that may occur in the demultiplexed data stream. This is because, in general, it is better to distribute gaps within the data signal to make demultiplexing the signal easier, since the receiver is not forced to process all the gaps in one instance. Parity field 330, which is a collection of checksums that result from applying the Reed-Solomon error correction method, can thus be placed arbitrarily within the SONET frame (as long as they are not placed within the sequence of A1-A2 framing bytes) and will not effect the implementation of the forward error correction method.

In a standard OC12 signal, the A1-A2 overhead occurs once every 9,720 bytes. In a standard OC48 signal, the number of bytes between A1-A2 overheads is four times as large as the number found in the OC12 signal (38,880 bytes). However, because the OC48 clock rate is four times faster, the time between the A1-A2 overheads remains the same at 125 microseconds. In the example of FIGURE 3, the A1-A2 overhead 340 occurs once every 10,440 bytes. Although this is 720 bytes more than a standard SONET OC12 frame, the A1-A2 overhead still repeats once every 125 microseconds because the clock rate of the signal is also increased in proportion to the additional bytes occupied by the checksum data. This principle can be easily extended to higher rates. For example, in an OC-48 system, the length of a frame containing the checksum data of a 232/216 code would be four times 10,440 bytes, but the clock rate would be four times faster to still yield a period of 125 microseconds per frame.

Thus, applying a (STM4) OC-12 signal to this encoding produces the format of FIGURE 3 with 10,440 bytes per SONET frame. If the first shortened 232-byte RS codeword in the sequence of 45 codewords per frame is chosen such that the framing bytes (A1-A2 bytes) are located immediately before the checksums (parity field 330), then the A1-A2 pattern 340 will occur again exactly 45 RS codewords later. What this means is that the A1-A2 framing bytes will occur exactly once per SONET frame. Thus, even though parity field 330 may occur at various points within the SONET frame, the SONET frame will never overwrite the A1-A2 framing bytes because the total number of bits separating each checksum divides evenly into the total number of bits separating the A1-A2 overhead location.

The A1-A2 framing bytes contain SONET framing information. While there are other overhead locations in the SONET signal that may be overwritten by the parity field 330, or by the addition of checksum bytes, the A1-A2 framing bytes 340 cannot be overwritten using the method of this invention. This is because exactly 45 shortened RS codewords will fit inside of one OC-12 SONET frame that has had the encoding information added to it. With or without the encoding, with the Reed-Solomon shortened code of the present invention, the A1-A2 framing bytes 340 occur exactly once every 125 microseconds.

Because the SONET frame period must remain constant, to make up for the difference in codeword length the clock and clock ratio of a circuit implementing the present invention must be changed. The shortened Reed Solomon 232/216 code word has a ratio of code word length to message length of 1.0741 (e.g., 232 divided by 216, which equals approximately 1.0741). Note that different clock and clock ratios can be used with the method and system of this invention by choosing a smaller or larger length Reed-Solomon codeword (as long as the selected length is an integer value that divides evenly into the SONET frame length). If the Reed-Solomon codeword is too short, there could be sacrifices in efficiency resulting from having to greatly increase the clock rate to maintain the 125-microsecond SONET frame.

FIGURE 4 shows an example of an implementation of the present invention in which a standard Reed-Solomon code is extended from an RS 255/239 codeword size to an RS 256/240 codeword size. The description of FIGURE 4 is similar to that of FIGURE 3, and includes 162 extended RS codewords 410, consisting of message field 420 of 240 bytes length and parity field 430 of 16 bytes in length. FIGURE 4 also includes A1-A2 framing bytes 440, in this case 48 A1 and 48 A2 bytes, and C1 overhead bytes 450. FIGURE 4 illustrates that the method and system of the present invention can be used with an extended Reed-Solomon codeword format. However, although it is possible to extend Reed-Solomon codewords, it is a much more difficult endeavor. Shortening of Reed-Solomon codes is more well known in the art.

However, the method and system of this invention can be used with any length Reed-Solomon code, or other error correction method, so long as the codewords fit an even number of times between successive A1-A2 framing bits for whatever SONET frame bandwidth is chosen. Although the examples shown in FIGURE 3 and FIGURE 4 are for OC-12 and OC-48 SONET frames, the method and system of this invention can be implemented in larger SONET frame sizes. For example, an OC-12 circuit, according to the teachings of this invention, can be replicated 16 times to build an OC-192 transmission system. The method and system of this invention are thus very scalable as needs require. This is one of the most useful aspects of a SONET system, in that even though a method can be created around, for example, an STS 12 signal, the system and method of this invention can be scaled and implemented for a greater bandwidth. The scalable functionality of this invention can be accomplished by linking together in a parallel manner multiple smaller scale circuits to form a larger bandwidth circuit. This is further explained below.

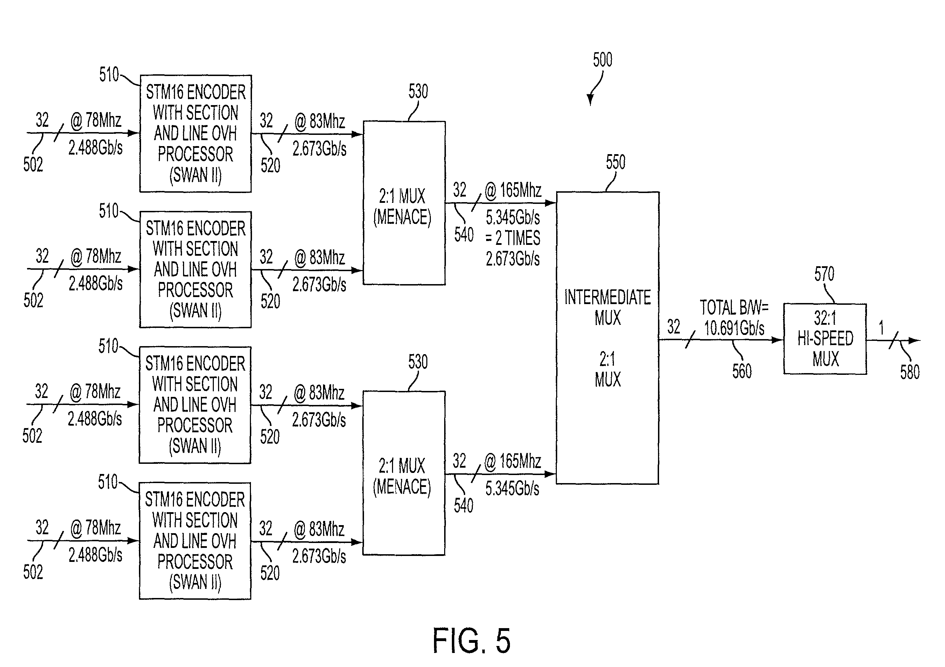

The scalable nature of the method and system of the present invention are shown by FIGURE 5 through 8. FIGURE 5 is a block diagram representation of the transmission side of an STM64 (OC-192) SONET transmission system implementing the frame synchronous forward error correction method and system of the present invention.

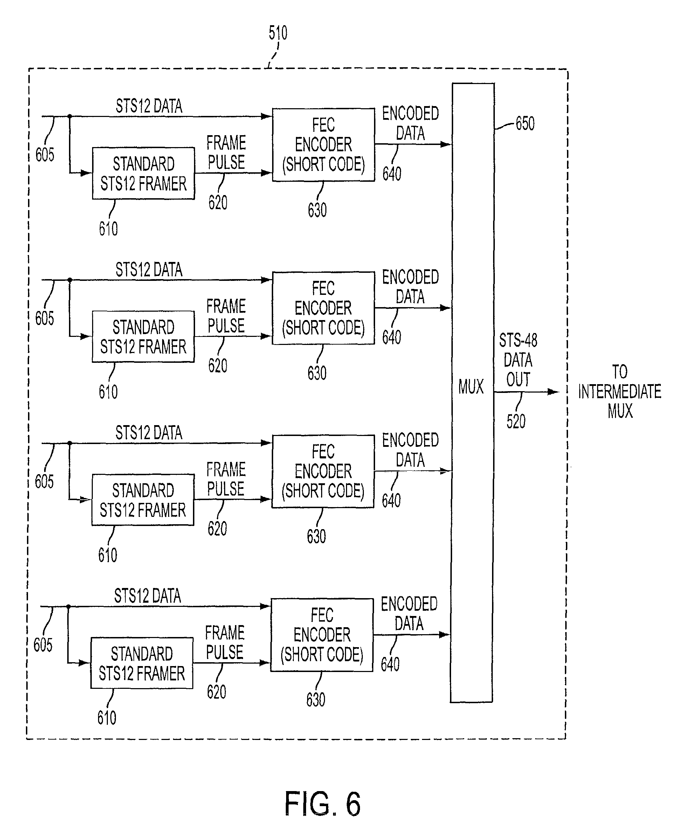

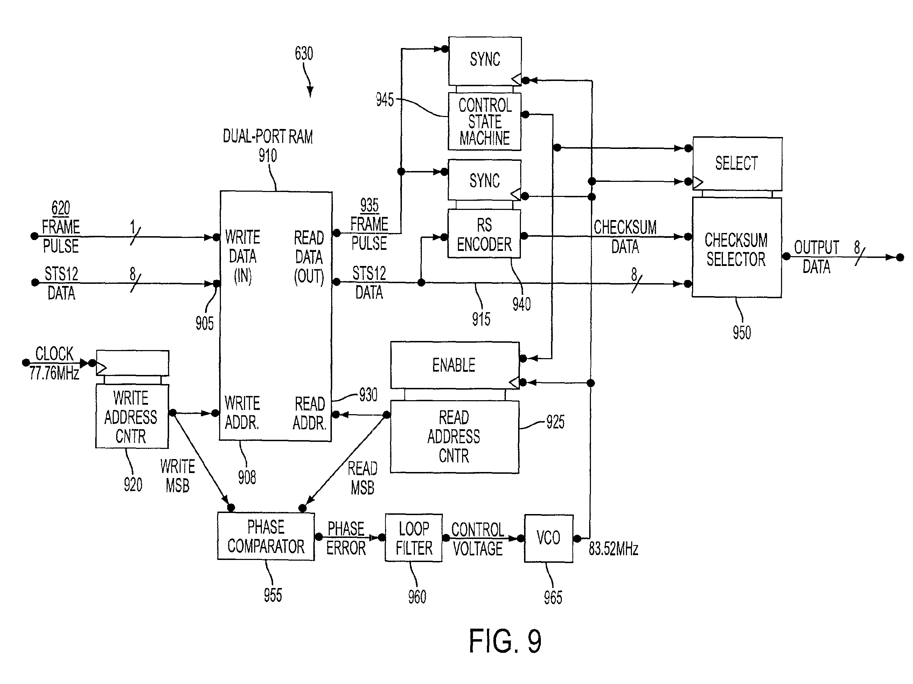

SONET transmission system 500 of FIGURE 5 receives as inputs four sets of 32 parallel input lines 502, one set each into each of four STM16 (OC-48) encoders 510 having section and line overhead (OVH) processors (or section and line processors). Parallel input lines 502 and STM16 encoders 510 are simplifications of the scaled OC-12 embodiments discussed above. A more detailed discussion follows with reference to FIGURES 6 and 8.

In FIGURE 5, STM16 encoders 510 take as input SONET frames carried along parallel input lines 502, and using, for example, a shortened Reed-Solomon code as per the teachings of this invention, insert encoded checksum data as parity fields 310 and 410 of FIGUREs 3 and 4, respectively, made available by the increase in data rate from 2.488Gb/s to 2.673Gb/s. Each set of input parallel lines 502 can together carry 2.488 gigabits per second, for a total of 4 ∗ 2.488 = 9.952 gigabits per second, corresponding to a 10-gigabits per second SONET transmission system. The thirty-two individual lines of each set of input parallel lines 502 are represented as a single line in FIGURE 5 for clarity.

At the output of each STM16 encoder 510, encoded data 520 is output along a set of 32 parallel intermediate outputs at a clock speed of 83.52 megahertz, carrying a combined 2.673 gigabits per second per intermediate output set. The increase in data carried along each set of output parallel lines is due to the added encoded checksum data placed in the data stream by each STM16 encoder 510. The increase in data rate ensures that the none of the input SONET data is overwritten by the checksum data. The output from STM16 encoder 510 is driven by an output clock that is 7.41% faster than the input clock to account for the added checksum data while maintaining a SONET frame period of 125 microseconds. Output encoded data sets 520 from each of the STM16 encoders 510 comprise encoded data in which the A1-A2 transition occurs once exactly every 334,080 bits (41760 bytes multiplied by 8 bits per byte). As will be shown in FIGUREs 6 and 8, STM16 encoders 510 include one or more framers to create a frame pulse corresponding to the A1-A2 transition to synchronize the location of the checksums relative to the A1-A2 transition. This relationship can be arbitrarily set.

Two sets of output parallel encoded data 520 are forwarded to each of two N:1 multiplexers 530. In a preferred embodiment, the N:1 multiplexer is a 2:1 multiplexers 530. 2:1 multiplexers 530 each output encoded output data as intermediate output signal 540, comprising 32 parallel data lines at twice the clock speed (167 MHz) of output encoded data 520, for a combined output capacity of 5.345 gigabits per second each. Both intermediate output signals 540 are forwarded to and received by intermediate multiplexer 550, which performs the same function as two-to-one multiplexers 530 to produce a final parallel output signal 560 having a total bandwidth of 10.691 gigabits per second.

Final parallel output 560 consists of 32 parallel lines combining together for a bandwidth of 10.691 gigabits per second. Final parallel output 560 is received at high speed multiplexer 570, which combines the 32 parallel lines into a single transmitted output 580 having a bandwidth of 10.691 gigabits per second.

FIGURE 6 is a more detailed block diagram of STM16 encoder 510 of FIGURE 5. FIGURE 6 illustrates the scalability of the method and system of the present invention to show that a greater bandwidth encoder can be built by combining multiple lesser bandwidth encoders. FIGURE 6 shows four STS 12 encoders combined together with a multiplexing circuit to comprise STM16 encoder 510. Input data streams 605 together comprise one set of input parallel lines 502 of FIGURE 5. Each input data stream 605 is comprised of eight of the thirty-two input parallel lines of set 502. Input data streams 605 are each forwarded to an STS 12 framer 610 and to an FEC encoder 630. Framer 610 generates a frame pulse 620 that initializes the state machines within each encoder 630.

Framing pulse 620 initializes forward error correction encoder 630 (e.g., a Reed-Solomon encoder) with the input data stream 605 to establish and maintain the required relationship between the A1-A2 framing bits in the SONET frame and the checksum data added by FEC encoder 630. The 216 byte message within each Reed-Solomon codeword is thus supplemented with 16 bytes of checksums and the relationship of the framing bytes to the checksums are maintained between each set of SONET framing bytes. FEC encoder 630 outputs encoded data 640, which now contains the combined message data and checksums in the SONET frames. FEC encoder 630 includes a state machine that is initialized by frame pulse 620 and is used as a counter to control the selection and insertion of checksum data into the output data stream.

The encoded data 640 output from each FEC encoder 630 is forwarded to encoder multiplexer 650. Encoder multiplexer 650 receives and combines the four encoded data signals 640 to produce a single encoded output signal 520 of FIGURE 5 having a combined bandwidth of 2.673 gigabits per second, as previously described with regards to FIGURE 5. Output signal 520 is provided to 2:1 multiplexer 530 of FIGURE 5, from which it proceeds as previously discussed.

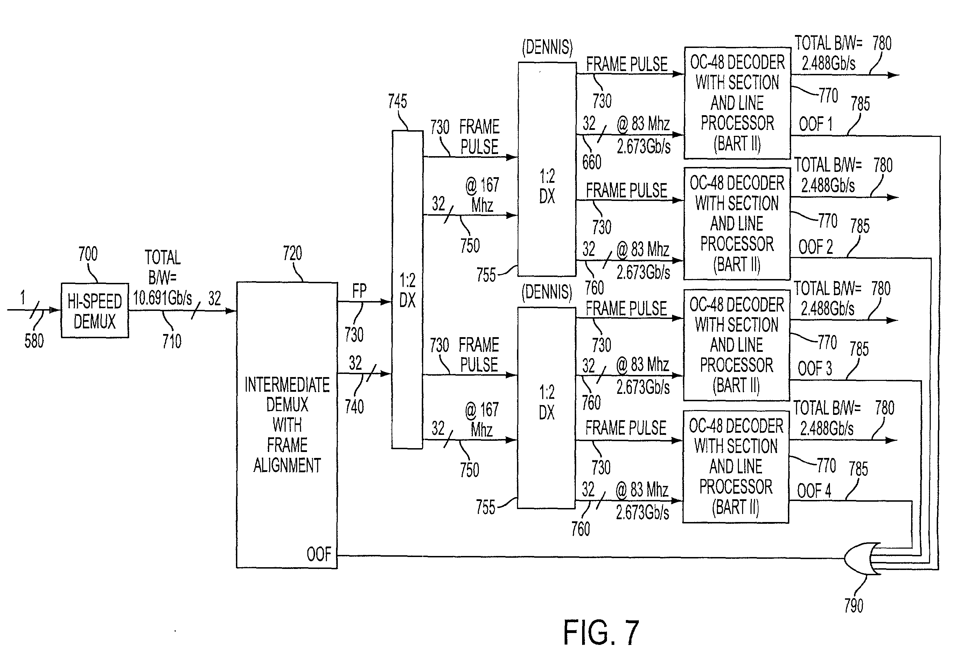

FIGURE 7 is a block diagram representation of the reception side of SONET transmission system 500 of FIGURE 5. Transmitted output 580 is received at high speed demultiplexer 700, which performs the inverse function of high speed multiplexer 570 of FIGURE 5. High speed demultiplexer 700 demultiplexes transmitted output 580 into 32 parallel outputs signals 710, together combining for a total bandwidth of 10.691 gigabits per second, the bandwidth of input signal 580. The 32 parallel output signals 710 are forwarded to intermediate demultiplexer 720, which also has a frame alignment circuit or aligner which performs a frame alignment function. A frame alignment circuit within intermediate demultiplexer 720 can recognize the A1-A2 transition in the SONET frames within output signals 710 and will produce frame pulses 730 that occur once every 125 microseconds. Frame pulses 730 drive frame verification circuits, typically implemented in CMOS technology. The frame verification circuits are contained within OC-48 decoders 770 and are used to verify that no data has been lost or corrupted in transmission.

The frame verification circuits used in this invention are slightly different from a standard prior art frame verification circuit used with a standard Reed-Solomon method, but are no more complex than the standard circuits used in existing SONET designs. The frame verification circuits of this invention need only account for the additional time slots between the framing patterns occupied by the checksums. Thus, only one layer of framing is required and this layer is very similar to the existing SONET layer. The embodiments discussed thus far are illustrative, and the approach used by the method and system of this invention can easily be applied to higher bandwidths besides OC-12, OC-48 and OC-192.

Intermediate demultiplexer 720 outputs frame pulse 730 and 32 parallel intermediate data outputs 740 to 1:N demultiplexer 745. In a preferred embodiment, the 1:N demultiplexer is a 1:2 demultiplexer 745. 1:2 demultiplexer 745 outputs two sets of 32 parallel outputs 750 and a framing pulse 730, one set each and a framing pulse each to each of two 1:2 demultiplexers 755. 1:2 demultiplexers 755 perform the same function as 1:2 demultiplexers 745 and output two sets of 32 parallel outputs 760 and a framing pulse 730 for each output set 760. The 10.691 gigabit per second bandwidth transmitted output 580 is thus separated (demultiplexed) into four sets of 32 parallel output streams 760, each set containing a 2.673 gigabit per second capacity bandwidth.

An OC-48 decoder 770 receives one set each of the 32 parallel output streams 760 from 1:2 demultiplexers 755. Each OC-48 decoder decodes the received data stream and provides as output a corrected data stream 780 having a total bandwidth of 2.488 gigabits per second and comprising 32 parallel corrected data outputs 780. Corrected data streams 780 each have a total bandwidth less than their corresponding parallel output streams 760 because each OC-48 decoder 770 removes the checksum data.

Output verification signal 785 is also output from OC-48 decoder 620. Output verification signal 785 is fed back to intermediate demultiplexer with frame alignment 720 through verification multiplexer 790 as a feedback loop that controls whether or not the intermediate demultiplexer with frame alignment 720 must re-align its internal state machines with the A1-A2 transition occurring within the transmitted output 580. If any OC48 decoder 770 detects an out-of-frame (OOF) condition, then the output verification signal 785 activates the frame alignment circuits in the intermediate demultiplexer 720. The frame synchronous forward error correction scheme of the present invention can thus correct corrupted data to ensure that corrected data streams 780 comprise data which is substantially error-free and substantially matches the data stream inputs 502 into SONET transmission system 500.

The data output from SONET transmission system 500 can be corrected according to the teachings of this invention to ensure that corrected data streams 780 accurately represent the input signals 502 of FIGURE 5 and data stream integrity is maintained. The encoding and decoding method and system of the present invention are independent of the high speed circuitry (high speed multiplexer 570 and high speed demultiplexer 70). Encoding and decoding and error correction functions are thus performed at the transmission and reception ends of SONET transmission system 500 without affecting the high speed intermediate transmission.

The method and system of the present invention provides technical advantages in that currently used intermediate high speed multiplexer and demultiplexer circuitry can still be compatibly used with the modified Solomon Reed encoding method of this invention, thus reducing circuit redesign and expense. Similarly, the method and system of this invention can be implemented with minimal software changes to existing systems for upgrade. The method and system of this invention can correct any occurring 8-bit errors, even if they are non-consecutive, and can improve the overall transmission system gain. Lastly, the framing method can be the same as in existing STM64 systems, with only the frame counters changing to account for the additional checksum data that requires a slightly higher clock rate for the combined forward error correction codewords.

FIGURE 8 is a more detailed block diagram of OC-48 decoder 770 of FIGURE 7. The description of FIGURE 8 closely parallels the description of FIGURE 6 with the exception that it is a demultiplexing circuit as opposed to a multiplexing circuit. OC-48 decoder 770 separates (demultiplexes) parallel output stream 760 into four encoded data signals 810 at demultiplexer 805. Demultiplexer 805 also forwards a framing pulse 730 to each FEC decoder 830. Each FEC decoder 830 performs the decoding function described above according to the teachings of the present invention and forwards a corrected STS12 output signal 820. The four corrected STS12 output signals together comprise a corrected data stream 780 of FIGURE 7.

Figure 9 is a block diagram of the FEC encoder shown in Figure 6. Figure 9 describes three operations. The first operation consists of converting an input data rate to a higher data rate so that additional time slots in the data stream are available for inserting checksum data without overwriting any of the input data. The second operation consists of generating the checksum data, and the third operation consists of inserting the checksum data into the new timeslots to form the encoded output data consisting of a continual sequence of code words.

A frame pulse 620 from the framer 610 along with the STS12 data is clocked into the write port 905 of a dual-port RAM 910 with a 77.76MHz clock. At this clock rate, the STS12 data is conveyed as an 8-bit bus 915. The data on this bus 915 appears as a sequence of SONET bytes that transition on every cycle of the 77.76MHz clock. In addition to the data bus 915, the frame pulse 620 from the framer 610 is also clocked into the same write port 905. In this example, a 9X32 dual port RAM 910 is appropriate with the 9th bit conveying the frame pulse 620.

A divide-by-32 counter 920 provides sequential addresses to the write address port 908 of the RAM 910. A similar counter 925 on the other side of the RAM 910 provides sequential addresses to the read address port 930 of the RAM 910. The most significant bit from each counter drives a phase-locked loop to maintain a fixed phase relationship between the read address sequence and the write address sequence. This ensures that the read address counter 925 never accesses an address at the same time that it is being written on the other side of the RAM 910.

The frame pulse 935 that emerges from the output of the RAM 910 synchronizes an encoder 940 and a state machine 945 shown at the top of the diagram. In a preferred embodiment, the state machine 945 is a divide-by-232 counter that generates a control signal to periodically halt the read address counter 925 and select the checksum data for insertion into the output data signal. The control signal goes active for 16 consecutive clock cycles during which the read address counter 925 is not incremented and the checksum selector 950 conveys the checksum data to the output instead of the STS12 data.

No STS 12 data is lost using this arrangement because the write address counter continues to write the incoming STS 12 data into the RAM 910 in consecutive address locations. No data is lost through the RAM 910 as long as the average rate of writing data into the RAM 910 equals the average rate of reading data out of the RAM 910. This is true even though the read address counter 925 is clocked at a faster rate because periodically the faster read counter 925 is halted while checksum data is selected for transmission through the selector 950. This average equality is maintained by the phase comparator 955, loop filter 960, and VCO 965 that implement a phase-locked loop. The phase comparator 955 is a type commonly available that provides a 180 degree phase relationship between the MSB outputs from each counter.

The method and system of this invention can be implemented as operational instructions, stored in memory and executed by a processing module. The processing module may be a single processing device or a plurality of processing devices. Such a processing device may be a microprocessor, microcomputer, digital signal processors, central processing unit of a computer or a work station, digital circuitry, state machine and any other device that manipulates signals (e.g., analog and/or digital) based on operational instructions.

The memory may be a single memory device or a plurality of memory devices. Such a memory device may be a random access memory, read-only memory, extended memory or any device that stores digital information. Note that when a processing module implements one or more of its functions, via state machine or logic circuitry, the memory stored in the corresponding operational instructions is embedded within the circuitry comprising the state machine or logic circuitry.

The method and system of the present invention can be implemented on a SONET transmission system or any other fiber optic transmission system that uses frames. Many of the components of the circuitry of the present invention, and in particular the multiplexing and demultiplexing circuits and clocking an encoded circuitry described are well known to those in the art.

Although the present invention has been described in detail herein with reference to the illustrative embodiments, it should be understood that the description is by way of example only and is not to be construed in a limiting sense. It is to be further understood, therefore, that numerous changes in the details of the embodiments of this invention and additional embodiments of this invention will be apparent to, and may be made by, persons of ordinary skill in the art having reference to this description. It is contemplated that all such changes and additional embodiments are within the spirit and true scope of this invention as claimed below.

## Claims

1. A method for applying error correction codes to SONET format optical data using an error correction circuit, comprising:
adjusting the length of an error correction method codeword containing an error correction portion such that a whole number of codewords fit evenly between SONET framing bytes; and
synchronizing the error correction circuit to an A1-A2 transition in the SONET frame.

2. The method of claim 1, wherein said step of synchronizing the error correction circuit further comprises the steps of:
generating a framing pulse at a framer; and
sending the framing pulse to a state machine to initialize the registers in an encoder to a start state for the encoding process, wherein the start state corresponds to an initial loaded value defined by the A1-A2 transition.

3. The method of claim 2, further comprising the step of sending the framing pulse to a decoder to locate said error correction portion of said codeword.

4. The method of claim 2, wherein said framing pulse defines the location of said A1-A2 transition.

5. The method of claim 2, wherein the A1-A2 transition divides a plurality of A1 bytes from a plurality of A2 bytes, and further wherein the position of the repeating A1 bytes remains adjacent to the repeating A2 bytes throughout the SONET frame.

6. The method of claim 1, wherein said error correction code is a frame synchronous forward error correction code.

7. The method of claim 1, wherein said error correction code is a Reed-Solomon error correction code.

8. The method of claim 1, wherein said error correction circuit comprises high-speed multiplexing and demultiplexing circuits.

9. The method of claim 1, wherein said codeword is a shortened Reed-Solomon codeword having 216 message field bytes and 16 checksum bytes.

10. The method of claim 1, wherein said codeword is an extended Reed-Solomon codeword having 240 message field bytes and 16 checksum bytes.

11. The method of claim 1, wherein said error correction portion comprises checksum data.

12. The method of claim 1, wherein the step of synchronizing the error correction circuit further comprises synchronizing one or more encoders so that said error correction portion appears periodically after each A1-A2 transition.

13. The method of claim 1, wherein said SONET format is an OC-12, OC-48, or OC-192 format.

14. The method of claim 1, wherein said error correction method comprises adjusting codewords such that a whole number of codewords fit evenly between SONET framing bytes.

15. The method of claim 1, wherein the location of said error correction portion between said SONET framing bytes is chosen arbitrarily.

16. The method of claim 1, further comprising the step of adjusting said error correction circuit's clock to maintain a SONET frame period of 125 microseconds as the length of said codeword is adjusted.

17. The method of claim 1, wherein said error correction circuit can be scaled to accommodate greater or lesser data capacity.

18. The method of claim 1, wherein said error correction circuit further comprises frame verification circuits within one or more decoders for verifying the integrity of received data.

19. The method of claim 1, wherein said error correction method is implemented as operational instructions, stored in a memory and executed by a processing module.

20. A system for error correcting of SONET format optical data, comprising:
an error correction circuit;
instructions stored in memory for adjusting the length of an error correction method codeword containing an error correction portion such that a whole number of codewords fit evenly between SONET framing bytes; and
instructions stored in said memory for synchronizing the error correction circuit to an A1-A2 transition in the SONET frame.

21. The system of claim 20, wherein said instructions for synchronizing the error correction circuit further comprise:
instructions for generating a framing pulse at a framer; and
instructions for sending the framing pulse to a state machine to initialize the registers in an encoder to a start state for the encoding process, wherein the start state corresponds to an initial loaded value defined by the A1-A2 transition.

22. The system of claim 21, further comprising instructions stored in said memory for sending the framing pulse to a decoder to locate said error correction portion of said codeword.

23. The system of claim 21, wherein said framing pulse defines the location of said A1-A2 transition.

24. The system of claim 21, wherein the A1-A2 transition divides a plurality of A1 bytes from a plurality of A2 bytes, and further wherein the position of the repeating A1 bytes remains adjacent to the repeating A2 bytes throughout the SONET frame.

25. The system of claim 20, wherein said error correction code is a frame synchronous forward error correction code.

26. The system of claim 20, wherein said error correction code is a Reed-Solomon error correction code.

27. The system of claim 20, wherein said error correction circuit comprises high-speed multiplexing and demultiplexing circuits, optical-to-electrical and electrical-to-optical converters, framers, encoders and decoders.

28. The system of claim 20, wherein said codeword is a shortened Reed-Solomon codeword having 216 message field bytes and 16 checksum bytes.

29. The system of claim 20, wherein said error correction portion comprises checksum data.

30. The system of claim 20, wherein the instructions for synchronizing the error correction circuit further comprise instructions for synchronizing one or more encoders so that said error correction portion appears periodically after each A1-A2 transition.

31. The system of claim 20, wherein said SONET format is an OC-12, OC-48, or OC-192 format.

32. The system of claim 20, wherein said error correction method comprises adjusting codewords such that a whole number of codewords fit evenly between SONET framing bytes.

33. The system of claim 20, further comprising instructions stored in said memory for adjusting said error correction circuit's clock to maintain a SONET frame period of 125 microseconds as the length of said codeword is adjusted.

34. The system of claim 20, wherein said error correction circuit can be scaled to accommodate greater or lesser data capacity.

35. The system of claim 20, wherein said error correction circuit further comprises frame verification circuits within one or more decoders for verifying the integrity of received data.

36. The system of claim 20, wherein said error correction method is implemented as operational instructions, stored in said memory and executed by a processing module.

37. A method of forward error correction, comprising the steps of:
fixing a relationship between checksums and framing bytes; and
synchronizing FEC encoders to an A1-A2 transition;
synchronizing FEC decoders to an A1-A2 transition.

38. The method according to claim 37, wherein said step of synchronizing FEC encoders comprises checksums appearing periodically after every said A1-A2 transition.

39. The method according to claim 37, wherein said step of fixing comprises fitting codewords an even number of times between successive A1-A2 framing bits of a SONET frame.

40. The method according to claim 37, wherein said step of fixing comprises making the length of a frame an integer multiple of a length of a codeword.

41. The method according to claim 37, wherein said step of fixing comprises separating each checksum by a total number of bits which divides evenly into a total number of bits separating an A1-A2 overhead location.

42. The method according to claim 37, wherein said step of synchronizing FEC decoders comprises using said A1-A2 transitions to locate checksums used for error correction.

43. The method according to claim 37, wherein said step of fixing comprises dividing a codeword evenly between A1-A2 framing bytes.

44. The method according to claim 39, wherein said codeword is a Reed-Solomon codeword.

45. The method according to claim 40, wherein said codeword is a Reed-Solomon codeword.

46. The method according to claim 43, wherein said codeword is a Reed-Solomon codeword.

47. The method according to claim 44, wherein said Reed-Solomon codeword is a 232/216 Reed-Solomon codeword.

48. The method according to claim 45, wherein said Reed-Solomon codeword is a 232/216 Reed-Solomon codeword.

49. The method according to claim 46, wherein said Reed-Solomon codeword is a 232/216 Reed-Solomon codeword.

50. A SONET transmission system, comprising:
a transmitter, comprising:
a SONET multiplexer; and
an electrical-to-optical converter operably connected to said multiplexer; and
a receiver, comprising:
an optical-to-electrical converter; and
a SONET demultiplexer operably connected to said optical-to-electrical converter.

51. The transmission system according to claim 50, wherein said decoder comprises:
an UHF demultiplexer having a serial input and a parallel output;
an intermediate demultiplexer operably connected to said UHF demultiplexer; and
an FEC decoder operably connected to said intermediate demultiplexer.

52. The transmission system according to claim 50, wherein said SONET multiplexer comprises:
a plurality of encoders each having a section processor and a line processor;
a plurality of N:1 multiplexers, whereby outputs from two of said plurality of encoders is input to one of said plurality of N:1 multiplexers;
at least one intermediate multiplexer, whereby outputs from two of said plurality of N:1 multiplexers is input to one of said at least one intermediate multiplexer; and
at least one hi-speed multiplexer, whereby outputs from said intermediate multiplexer is input to said hi-speed multiplexer.

53. The transmission system according to claim 50, wherein said SONET demultiplexer comprises:
at least one hi-speed demultiplexer;
at least one intermediate demultiplexer with a frame aligner, whereby outputs from said hi-speed demultiplexer are input to said intermediate demultiplexer and wherein said frame alignment circuit outputs frame pulses corresponding to A1-A2 transitions;
a first plurality of 1:2 demultiplexers, whereby data output and a framing pulse from said at least one intermediate demultiplexer is input to at least one of said plurality of 1:N demultiplexers;
a second plurality of 1:N demultiplexers, whereby data output and a framing pulse from said at least one 1:N demultiplexer in said first plurality is input to at least one of said plurality of 1:N demultiplexers in said second plurality;
a plurality of decoders each having a section processor and a line processor, whereby data output and a framing pulse from said at least one 1:N demultiplexer in said second plurality is input to at least one of said of said decoders; and
a verification multiplexer operably connected between at least one of said plurality of decoders and said intermediate demultiplexer.

54. The transmission system according to claim 52, wherein each of said plurality of encoders comprises:
a plurality of framers;
a plurality of FEC encoders each operably connected to one of said framers; and
an encoder multiplexer operably connected to said plurality of FEC encoders, whereby encoded data from said plurality of FEC encoders is multiplexed to produce a single encoded output.

55. The transmission system according to claim 52, wherein said SONET demultiplexer comprises:
at least one hi-speed demultiplexer;
at least one intermediate demultiplexer with a frame aligner, whereby outputs from said hi-speed demultiplexer are input to said intermediate demultiplexer and wherein said frame alignment circuit outputs frame pulses corresponding to A1-A2 transitions;
a first plurality of 1:2 demultiplexers, whereby data output and a framing pulse from said at least one intermediate demultiplexer is input to at least one of said plurality of 1:N demultiplexers;
a second plurality of 1:N demultiplexers, whereby data output and a framing pulse from said at least one 1:N demultiplexer in said first plurality is input to at least one of said plurality of 1:N demultiplexers in said second plurality;
a plurality of decoders each having a section processor and a line processor, whereby data output and a framing pulse from said at least one 1:N demultiplexer in said second plurality is input to at least one of said decoders; and
a verification multiplexer operably connected between at least one of said plurality of decoders and said intermediate demultiplexer.

56. The transmission system according to claim 53, wherein each of said plurality of decoders comprises:
a decoder demultiplexer;
a plurality of FEC decoders each operably connected to said decoder demultiplexer, whereby encoded data from said decoder demultiplexer is decoded and corrected by using A1-A2 transitions to locate checksums used for error correction.

57. The transmission system according to claim 54, wherein said FEC encoder comprises:
a dual port read and write memory;
a write address counter operably connected to a write address port of said memory;
a read address counter operably connected to a read address port of said memory;
a phased locked loop operably connected to a bit of said read address counter, and wherein said phased locked loop is also operably connected to a bit of said write address counter;
a state machine operably connected to an output of said memory and wherein said phased locked loop is also operably connected to said state machine;
a checksum selector operably connected to said state machine; and
an encoder operably connected between said output of said memory and said checksum selector and wherein said phased locked loop is also operably connected to said encoder, whereby said selector conveys checksum data when a control signal of said state machine is active.

58. The transmission system according to claim 55, wherein each of said plurality of decoders comprises:
a decoder demultiplexer;
a plurality of FEC decoders each operably connected to said decoder demultiplexer, whereby encoded data from said decoder demultiplexer is decoded and corrected by using A1-A2 transitions to locate checksums used for error correction.

59. A method of encoding data to correct errors, comprising:
sending at least one data stream, whereby each data stream is sent to one encoder and one framer;
generating a framing pulse at said framer;
sending said framing pulse to a state machine located in said encoder;
encoding said data;
synchronizing said encoding to an A1-A2 transition by fixing a relationship between checksum data and a A1-A2 SONET framing pattern; and
multiplexing said at least one data stream.

60. The method according to claim 59, wherein said step of synchronizing comprises the following steps:
initializing registers in said encoder to a start state, wherein said start state corresponds to an initially loaded value defined by an A1-A2 transition;
creating codewords by combining message data and checksums; and
fitting said codewords an even number of times between successive A1-A2 framing bits of a SONET frame.

61. The method of encoding data to correct errors according to claim 59, wherein said relationship is an integer relationship, wherein a number of bits separating said checksum data has an integer relationship with a number of bits separating an A1-A2 transition.

62. The method of encoding data to correct errors according to claim 59, further comprising the step of increasing data rate, whereby data is not overwritten.

63. The method of encoding data to correct errors according to claim 60, wherein said step of creating codewords by adding checksums comprises inserting encoded checksum data as parity fields.

64. The method according to claim 60, wherein said codeword is a Reed-Solomon codeword.

65. The method according to claim 62, wherein said step of increasing data comprises driving the output of an encoder faster than an input of said encoder.

66. The method according to claim 63, wherein said codeword is a Reed-Solomon codeword.

67. The method according to claim 64, wherein said Reed-Solomon codeword is a 232/216 Reed-Solomon codeword.

68. The method according to claim 66, wherein said Reed-Solomon codeword is a 232/216 Reed-Solomon codeword.

69. A method of receiving data in a transmission system, comprising:
demultiplexing received data;
recognizing A1-A2 transitions;
producing frame pulses corresponding to said transitions;
decoding said received data;
outputting a corrected data stream by removing said checksums;
feeding back an output verification signal; and
verifying no data has been lost or corrupted.

70. The method according to claim 69, wherein said step of recognizing A1-A2 transitions further comprises locating dedicated framing bits needed to find said checksums.

71. The method according to claim 69, further comprising the step of using said A1-A2 transitions to locate checksums used for error correction.

72. The method according to claim 69, further comprising the following steps of encoding data to correct errors:
sending at least one data stream, whereby each data stream is sent to one encoder and one framer;
generating a framing pulse at said framer;
sending said framing pulse to a state machine located in said encoder;
encoding said data;
synchronizing said encoding to an A1-A2 transition by fixing a relationship between checksum data and a A1-A2 SONET framing pattern; and
multiplexing said at least one data stream.

73. The method according to claim 69, wherein said transmission system is a SONET transmission system.

74. The method according to claim 72, wherein said step of synchronizing comprises the following steps:
initializing registers in said encoder to a start state, wherein said start state corresponds to an initially loaded value defined by an A1-A2 transition;
creating codewords by combining message data and checksums; and
fitting said codewords an even number of times between successive A1-A2 framing bits of a SONET frame.

75. The method according to claim 74, wherein said codeword is a Reed-Solomon codeword.

76. The method according to claim 75, wherein said Reed-Solomon codeword is a 232/216 Reed-Solomon codeword.

77. A method of encoding data to correct errors in a transmission system, comprising the steps of:
inserting time slots;
filling said time slots with checksum data; and
increasing a data rate in proportion to additional bytes occupied by checksum data.

78. The method according to claim 77, further comprising the step of:
separating said checksum data using a number of bits having an integer relationship with a number of bits used to separate an A1-A2 transition.

79. The method according to claim 77, wherein said step of inserting checksum data further comprises the steps of:
halting reading of data; and
selecting checksum data for transmission.

80. The method according to claim 77, wherein said transmission system is a SONET transmission system.
